# EUROPÄISCHE PATENTANMELDUNG

(11) **EP 1 936 142 A1**
(43) Veröffentlichungstag der Anmeldung: **25.06.2008**
(21) Anmeldenummer: 06127137.5
(22) Anmeldetag: 22.12.2006
(51) Int. Cl.: F02B 19/10, F02M 31/16

(54) **Misch- und Zündsystem für Verbrennungsmotoren**

(71) Anmelder: Dualon International Holding SA, 2086 Luxemburg (LU)
(72) Erfinder: GEISSER, Heribert O., 9422, Staad (CH); STÖCKLI, Martin, 4450, Sissach (CH)
(74) Vertreter: Dantz, Jan Henning

(57) **Zusammenfassung**

Ein Misch- und Zündsystem für Verbrennungsmotoren, insbesondere für thermodynamische Maschinen oder Thermoanlagen umfasst eine Verbrennungshauptkammer (1) und eine benachbart angeordnete Verbrennungsvorkammer (2), und ein Mischsystem zur gesteuerten und variabel dosierten Einbrennung eines Zusatzbrennstoffes in die Verbrennungsvorkammer (2) mittels der Zündung des Zusatzbrennstoffes in der Verbrennungsvorkammer (2) ist ein schlecht entzündliches Gasgemisch in der Verbrennungsvorkammer und damit auch in der Verbrennungshauptkammer (1) entzündbar, so dass eine stabile und reproduzierbare Verbrennung stattfindet.

## Beschreibung

Die vorliegende Erfindung betrifft ein Misch- und Zündsystem für Verbrennungsmotoren nach dem Oberbegriff des Anspruches 1.

Es gibt Zündsysteme, bei denen Gas-Luftgemische mittels Energiezufuhr, beispielsweise über Zündkerzen oder Glühstifte gezündet werden, was jedoch bei schlecht entzündlichen Gas-Luftgemischen Probleme mit sich bringen kann. Denn sowohl beim Motorstart als auch im normalen Motorbetrieb ist die stabile Zündung in einem Verbrennungsraum Voraussetzung für effektiven und zuverlässigen Betrieb.

Aus der EP 317 382 ist ein Verbrennungsmotor bekannt, bei dem benachbart zu dem Verbrennungsraum eine Vorkammer angeordnet ist in der eine Zündung über eine Zündhilfe erfolgt. Dadurch soll die Verbrennung gerade bei großen Brennkammern verbessert werden. Es ist allerdings bekannt, dass beim Einsatz von Fremdzündelementen die Lebensdauer beschränkt ist und diese daher in regelmäßigen Intervallen ersetzt werden müssen.

Die EP 235 569 zeigt eine Einrichtung zum wahlweisen Einspritzen von Dieselöl und Zündöl in den Brennraum einer mit Dieselöl oder mit Gas betriebenen Hubkolbenmotor. Dadurch kann in der Brennkammer wahlweise Zündöl oder ein anderer Brennstoff verbrannt werden, je nachdem ob der Motor gerade gestartet wird und welche Betriebsart gewählt werden soll. Damit kann zwar meist eine zuverlässige Zündung erreicht werden, allerdings lassen sich nur schlecht weniger leicht entzündliche Gasgemische verbrennen.

Auch die WO 99/66186 zeigt ein Verfahren zur Zündung eines Motors, bei dem ein Zündgas unabhängig von einer Motorsteuerung eingeblasen wird. Auch dadurch kann die Zündung in den Brennraum zuverlässig erfolgen.

Es ist daher Aufgabe der vorliegenden Erfindung ein Misch- und Zündsystem für Verbrennungsmotoren zu schaffen, das auch eine Verbrennung von nur schlecht entzündlichen Gasgemischen auf zuverlässige Weise ermöglicht.

Diese Aufgabe wird mit einem Misch- und Zündsystem mit den Merkmalen des Anspruches 1 gelöst.

Gemäß Anspruch 1 ist ein Mischsystem zur gesteuerten und variabel dosierten Einbringung eines Zusatzbrennstoffes in die Verbrennungsvorkammer vorgesehen, wobei mittels der Zündung des Zusatzbrennstoffes in der Verbrennungsvorkammer ein schlecht entzündliches Gasgemisch in der Verbrennungshauptkammer entzündbar ist. Dadurch werden die Vorteile des Einsatzes einer Verbrennungsvorkammer und der Einsatz eines Zusatzbrennstoffes für die Verwendung eines schlecht entzündlichen Gasgemisches in der Verbrennungshauptkammer kombiniert, wobei durch die Zündung in der Verbrennungsvorkammer auch die Zündung in der Verbrennungshauptkammer gewährleistet ist. Dadurch wird eine zuverlässige und gut reproduzierbare Zündung eines ansonsten schlecht entzündlichen Gasgemisches ermöglicht, ohne dass die Nachteile des Einsatzes von Zündhilfen auftreten. Durch den Zusatzbrennstoff wird in jedem Fall eine sichere Zündung gewährleistet.

Gemäß einer bevorzugten Ausgestaltung der Erfindung ist die Verbrennungsvorkammer rotationssymmetrisch ausgebildet und über einen oder mehrere Kanäle mit der Verbrennungshauptkammer verbunden. Die Verbrennungskammer und deren Halter sind in axiale ihrer Funktion entsprechenden Segmente unterteilt, beispielsweise als Halter, Vorkammerunterteil und Vorkammerdeckel.Dadurch lässt sich das Misch- und Zündsystem modular aufbauen und aus wenigen Bauteilen zusammensetzen, so dass auch eine nachträgliche Montage einer Verbrennungsvorkammer möglich ist.

Für eine einfache Montage kann die Verbrennungsvorkammer mit einem Kanal in eine Öffnung an der Verbrennungshauptkammer einsteckbar sein. Dadurch kann die Gestaltung der Verbrennungsvorkammer an die Ausgestaltung der Verbrennungshauptkammer angepasst sein.

Für eine sichere Zündung des Zusatzbrennstoffes ist in der Verbrennungsvorkammer vorzugsweise ein Zündelement vorgesehen, wobei das Zündelement als Zündkerze, Glühkerze, Laserzünder, Plasmazünder und/oder als Mikrowellenzünder ausgebildet sein kann. Der Zusatzbrennstoff kann ebenso gasförmig, flüssig und/oder fest bzw. pulverförmig ausgebildet sein. Ferner ist es möglich, die Verbrennung des Zusatzbrennstoffes durch Selbstzündung auszulösen, so dass auf das Zündelement verzichtet werden kann.

Gemäß einer weiteren Ausgestaltung der Erfindung ist das Volumen der Verbrennungsvorkammer kleiner als 20 %, vorzugsweise kleiner als 15 % als das Volumen der Verbrennungshauptkammer. Dabei kann die Energiezufuhr durch den Zusatzbrennstoff weniger als 20 %, vorzugsweise weniger als 15 % der gesamten freigesetzten Energie pro Verbrennungstakt ausmachen.

Für eine effektive Verbrennung in der Verbrennungsvorkammer kann diese eine im Wesentlichen kugelförmigen Bereich aufweisen. An diesen kugelförmigen Bereich schließt sich dann ein Kanal zur Verbindung mit der Verbrennungshauptkammer an. Die Verbrennungsvorkammer kann dabei an einem Vorkammerhalter montiert sein, der die Verbrennungsvorkammer umgibt.

Für eine effektive Verbrennung in der Verbrennungsvorkammer kann zur Einspritzung des Zusatzbrennstoffes ein Common-Rail-Einspritzsystem verwendet werden.

Vorzugsweise wird zur Steuerung des Volumenstromes des Zusatzbrennstoffes ein mechanisch oder elektronisch angesteuertes Dosierventil verwendet. Für einen Kaltstart oder einen Tieflastbetrieb kann über eine Steuerung für eine notwendige Selbstzündung auch eine Vorkonditionierung des Zusatzbrennstoffes vor Eintritt in die Verbrennungsvorkammer erfolgen. Beispielsweise kann der Zusatzbrennstoff hierfür erhitzt oder mit einem leicht entzündlichen Additiv vermischt werden.

Die Erfindung wird nachfolgend anhand eines Ausführungsbeispieles mit Bezug auf die beigefügte Zeichnung näher beschrieben. Es zeigt:

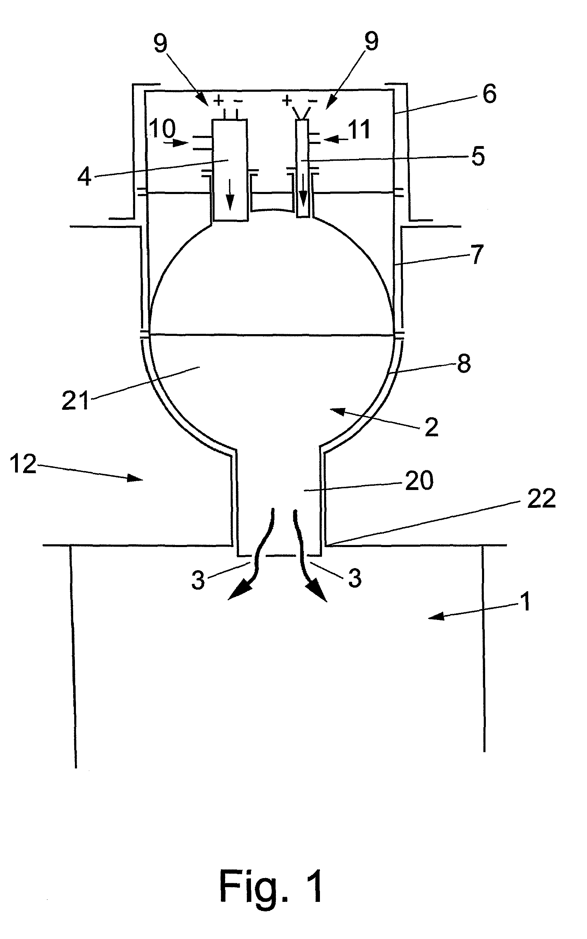

Figur 1 eine schematische Ansicht eines erfindungsgemäßen Misch- und Zündsystems.

Ein Misch- und Zündsystem umfasst eine Verbrennungshauptkammer 1, die benachbart zu einer Verbrennungsvorkammer 2 angeordnet ist. Die Verbrennungsvorkammer 2 besitzt einen im Wesentlichen kugelförmigen Bereich 21, der über einen zylindrischen Kanal 20 mit der Verbrennungshauptkammer 1 verbunden ist. Hierfür ist in der Verbrennungshauptkammer 1 an einer Wand eine Öffnung 22 vorgesehen, in die der Kanal 20 eingesteckt ist. Die Verbrennungsvorkammer 2 ist dabei rotationssymmetrisch ausgebildet.

Die Verbrennungsvorkammer 2 umfasst ein Dosierventil 4, mittels dem ein Zusatzbrennstoff in die Verbrennungsvorkammer 2 eingebracht werden kann. Ferner ist ein Zündelement 5 bzw. ein Zündhilfeelement vorgesehen, mittels dem die Zündung des Zusatzbrennstoffes ausgelöst werden kann. Das Zündelement 5 kann als Zündkerze, Glühkerze, Laserzünder, Plasmazünder und/oder Mikrowellenzünder ausgebildet sein.

Die Verbrennungsvorkammer 2 ist in einen zweiteiligen Vorsatzkörper 7 und 8 eingearbeitet, der an der Spitze eines Vorkammerhalters 6 sitzt. Der Vorsatzkörper 7 und 8 ist modular gestaltet und somit leicht austauschbar und demontierbar. Dabei ist der Vorkammerhalter 6 mit den beiden Teilen 7 und 8 als Steckmodul ausgebildet und kann zu einem Zylinderkopf 12 hin gespannt sein, um die Gegenkräfte des Druckes aus der Verbrennungshauptkammer 1 und der Verbrennungsvorkammer 2 aufnehmen zu können. Das Dosierventil 4 und das Zündelement 5 sind dabei an einem Deckel 7 des Vorsatzkörpers montiert. Für eine zuverlässige Verbrennung des Misch- und Zündsystems kann auch ein schlecht entzündliches Gasgemisch in die Verbrennungshauptkammer 1 eingeleitet werden, wobei dann in die Verbrennungsvorkammer 2 ein Zusatzbrennstoff zugeführt wird, welcher durch Selbstzündung oder durch Fremdzündung entzündet wird. Die so erzeugten brennenden Verbrennungsgase schießen dabei kurz nach der Zündung in der Verbrennungsvorkammer 2 über den Kanal 20 und Gasdurchtrittsbohrungen 3 in die Verbrennungshauptkammer 1 und entzünden das dort vorhandene Gasgemisch.

Die Einbringung des Zusatzbrennstoffes in die Verbrennungsvorkammer 2 erfolgt über das Dosierventil 4, das mechanisch oder elektronisch gesteuert ist. Der Zusatzbrennstoff kann dabei gasförmig, flüssig oder fest bzw. pulverförmig sein. Je nach Zusatzbrennstoff kann von außen Energie zur Erzeugung von lokal sehr hohen Temperaturen zugeführt werden. Auch das Zündelement kann elektrisch über eine Steuerung 9 angesteuert werden oder auch als passives Element ausgestaltet sein.

Die Verbrennungsvorkammer 2 besitzt vorzugsweise eine rotationssymmetrische Form und kann einen kugelförmigen Bereich aufweisen, wobei auch birnenförmige oder abgewandelte Formen eingesetzt werden können. Die Verbrennungsvorkammer 2 besitzt ein Volumen, das kleiner als 20 %, vorzugsweise kleiner als 15 % des Volumens der Verbrennungshauptkammer 1 ist. Entsprechend kann die Energiezufuhr durch den Zusatzbrennstoff weniger als 20 %, vorzugsweise weniger als 15 % der gesamten freigesetzten Energie pro Verbrennungstakt ausmachen.

Wenn im vorliegenden Anmeldungsentwurf von schlecht entzündbaren Gasgemischen die Rede ist, dann kann dies einerseits an dem Gasgemisch selbst liegen oder es können für Zündung schlechte Bedingungen herrschen, wie tiefer Brennraumdruck, tiefe Temperatur, hohe Feuchtigkeit. Zudem kann die Qualität des Gasgemisches durch Feuchtigkeit (H₂O), einen Inertgasanteil (N₂, CO₂, Ar und weitere E-delgase. oder Verbrennungsgase infolge Abgasrezirkulation) oder undefinierte Gasgemische beeinträchtigt sein, wobei letzteres auch durch eine ungenügende Durchmischung (starke Gaskonzentrationsvariationen im Brennraum) hervorgerufen sein kann. Einige Gasgemische weisen zudem eine hohe Klopffestigkeit auf und benötigen eine hohe Zündenergie.

Als Zusatzbrennstoffe können gasförmige Brennstoffe, wie LNG, CNG, LPG, Methan, Bio-Gas, Erdgas, etc. oder Flüssigbrennstoffe, wie Diesel, Benzin, Kerosin, Methanol, Lachgas, Nitromethan etc. eingesetzt werden. Zudem ist es möglich, Festbrennstoffe, wie Kohlenstaub oder andere brennbare Feinststäube zu verwenden. Auch Kombinationen diverser Brennstoffe können verwendet werden.

## Patentansprüche

1. Misch- und Zündsystem für Verbrennungsmotoren, insbesondere für thermodynamische Maschinen oder Thermoanlagen, mit einer Verbrennungshauptkammer (1) und einer benachbart angeordneten Verbrennungsvorkammer (2), und einem Mischsystem zur gesteuerten und variabel dosierten Einbringung eines Zusatzbrennstoffes in die Verbrennungsvorkammer (2), **dadurch gekennzeichnet, dass** mittels der Zündung des Zusatzbrennstoffes in der Verbrennungsvorkammer (2) ein schlecht entzündliches Gasgemisch in der Verbrennungsvorkammer (2) und damit auch in der Verbrennungshauptkammer (1) entzündbar ist.

2. Misch- und Zündsystem nach Anspruch 1, **dadurch gekennzeichnet, dass** die Verbrennungsvorkammer (2) rotationssymmetrisch ausgebildet ist und über einen Kanal oder mehrere Kanäle (20) mit der Verbrennungshauptkammer (1) verbunden ist.

3. Misch- und Zündsystem nach Anspruch 1 oder 2, **dadurch gekennzeichnet, dass** die Verbrennungsvorkammer (2) mit einem Kanal (20) in eine Öffnung (22) an der Verbrennungshauptkammer (1) einsteckbar ist.

4. Misch- und Zündsystem nach einem der Ansprüche 1 bis 3, **dadurch gekennzeichnet, dass** in der Verbrennungsvorkammer (2) ein Zündelement (5) zur Zündung des Zusatzbrennstoffes vorgesehen ist.

5. Misch- und Zündsystem nach einem der Ansprüche 1 bis 4, **dadurch gekennzeichnet, dass** als Zündelement (5) eine Zündkerze, eine Glühkerze, ein Laserzünder, ein Plasmazünder und/oder ein Mikrowellenzünder vorgesehen ist.

6. Misch- und Zündsystem nach einem der Ansprüche 1 bis 5, **dadurch gekennzeichnet, dass** in der Verbrennungsvorkammer (2) die Verbrennung des Zusatzbrennstoffes durch Selbstzündung erfolgt.

7. Misch- und Zündsystem nach einem der Ansprüche 1 bis 6, **dadurch gekennzeichnet, dass** das Volumen der Verbrennungsvorkammer (2) kleiner als 20 %, vorzugsweise kleiner als 15 % als das Volumen der Verbrennungshauptkammer (1) ist.

8. Misch- und Zündsystem nach einem der Ansprüche 1 bis 7, **dadurch gekennzeichnet, dass** die Verbrennungsvorkammer (2) einen im Wesentlichen kugelförmigen Bereich (21) aufweist.

9. Misch- und Zündsystem nach einem der Ansprüche 1 bis 8, **dadurch gekennzeichnet, dass** die Verbrennungsvorkammer (2) an einem Vorkammerhalter (6) montiert ist.

10. Misch- und Zündsystem nach einem der Ansprüche 1 bis 9, **dadurch gekennzeichnet, dass** an der Verbrennungsvorkammer (2) zur Einspritzung des Zusatzbrennstoffes und zur Selbstzündung eines flüssigen Zusatzbrennstoffs ein Common-Rail-Einspritzsystem vorgesehen ist.

11. Misch- und Zündsystem nach einem der Ansprüche 1 bis 10, **dadurch gekennzeichnet, dass** zur Steuerung des Volumenstromes des Zusatzbrennstoffes ein mechanisch oder elektronisch angesteuertes Dosierventil (4) vorgesehen ist.

12. Misch- und Zündsystem nach einem der Ansprüche 1 bis 11, **dadurch gekennzeichnet, dass** eine Steuerung vorgesehen ist, mittels der der Zusatzbrennstoff vor Eintritt in die Verbrennungsvorkammer (2) vorkonditionierbar ist.
